# EUROPEAN PATENT SPECIFICATION

(11) **EP 4 401 859 B1**
(45) Date of publication and mention of the grant of the patent: **25.06.2025**
(21) Application number: 23717668.0
(22) Date of filing: 19.03.2023
(51) Int. Cl.: B01D 46/00, B01D 46/121, B01D 46/52

(54) **MINI-PLEAT V CELL FILTER**
MINI-PLEAT-V-ZELLENFILTER
FILTRE À CELLULE EN V À MINI-PLIS

(30) Priority: 19.03.2022 IN 202241015117
(43) Date of publication of application: 24.07.2024
(73) Proprietor: AEROFIL FILTERS INDIA PRIVATE LIMITED, Kerala 691505 (IN)
(72) Inventor: PULIPARA DAMODARAN, Santhosh Kumar, Tripunithura, Ernakulam 682301 (IN)
(74) Representative: Patentanwälte Bauer Vorberg Kayser
(86) International application number: PCT/IN2023/050265
(87) International publication number: WO 2023/181061

(56) References cited:
- WO-A1-2014/111162
- US-A1- 2012 067 013

## Description

### FIELD OF INVENTION

The present invention relates a mini-pleat compact filter. More specifically the invention relates to frame of the mini-pleat compact filter which is molded as a single plastic frame to hold the filter media, thus enabling a higher strength for the filter, resulting in a longer and safer operation.

### BACKGROUND OF THE INVENTION

Filters are widely used for air and gas filtration in industrial and commercial application. Mini-pleat V bank filters are one of the majorly used static filter. This type of filters have a series of paired filtration portions arranged in a V-shape and connected together at top and bottom of the plastic frame using a potting agent. The bases of the V-shape filtration portions are attached to a flange at the front which fits into the holding frame. The dust and pollutants from the airstream are removed by filtration process to provide clean air downstream of the filter. In installations at offshore and high humid atmosphere, moisture may also accumulate on to the filter medium increasing the resistance to the flow and eventually fully clogging the filter and eventually leading to collapse or bursting of filters. Longer service life is preferred in filters used in gas turbines to avoid leakage due to clogging of the filter and eventual collapse leading to frequent shut downs. It is also preferable that the filters used in this application have higher burst strength to protect the turbine blades from getting damaged. As of now the standard filters available in the market to serve these industries are the following:
1. Mini-Pleat V bank Filter, 592 wide x592 height x 292 to 300mm depth and burst strength up to 6200Pa.
   Mini-Pleat V bank Filter, 592 wide x592 height x400 to 445mm depth and burst strength up to 6200Pa.
   Half size and three quarter sizes of above filters are also used for various application.
Various products available in market such as, Aero Cell V and Aero cell SV mini-pleat compact filters made up of micro-fine glass, fiber media, synthetic media are available in a wide range of efficiencies from M6 to E14 ( MERV11 to MERV 18). Aero Cell V and SV are designed to be used in HVAC as well as in gas turbine air intake installations where highest degree of air cleanliness is required. Compact design, larger surface area resulting in higher dust holding, lower initial resistance and longer service life makes it an ideal alternative to ordinary bag filters and box type filters of similar efficiencies. This model is also available with very high burst resistance, for gas turbine air intake application where a high secure operation is needed to protect the turbine blades and prevent filters getting burst due to high dust loading or surging Aero Cell VGT Models are available with plastic grid support as face guards offering up to 6000pa burst strength. Similar filters available today has been tested to withstand up to 6000Pa of pressure.

The patent application US20110154991A1 titled "Intake air filter system" discloses an improved filter and system for minimizing the moisture removed by a filter from re-entering the flow of air through the filter. The air intake filter system comprises a housing connectable with a gas turbine for fluid communication with the gas turbine. A frame is located within the housing. A filter assembly comprises a flange connectible with the frame to mount the filter assembly. The flange has a portion contained in a first plane that is adapted to extend in a substantially vertical direction when mounted in the frame. The filter system comprises a housing connectable with a gas turbine for fluid communication with the gas turbine. The filter portion includes filter media capable of separating moisture from air flowing through the filter portion. A moisture resistant first end is attached to the flange and filter portion. The first end has a portion contained in a second plane that extends at an acute angle relative to the first plane. The first end is adapted to form a drain surface to direct moisture away from the interior of the filter assembly.

Another patent US8328895B2 titled "Filter media pleat pack retention" provides filter media pleat pack retention attained by providing a filter media pleat pack having a joining member located between a first filter media portion and a second filter media portion. The first filter media portion is coupled to the joining member at one side and the second filter media portion is coupled to the joining member at an opposite side. The joining member provides stiffness to the filter media pleat pack and provides support to the panel stopping excessive bowing under high pressure and subsequent tearing and puncture.

Similarly, in patent application US2007204579A1 titled "Box-V filter and method of fabricating the same", includes a filter assembly having a media pack having a single web of pleated media having at least two mini-seated regions arranged in non-linear orientation. In one embodiment, a filter assembly includes a media pack defined by a single web of media, and an adhesive layer coupling a flat end of the media pack to a frame assembly to from a lap joint. In another embodiment, a filter assembly includes a media pack sealed to a frame assembly. A discontinuous layer of adhesive couples at least one edge of the media pack to the frame assembly.

The filters such as that of the present invention are called by various names such as Mini-Pleat V cell or Mini-Pleat Compact Filter or Mini-Pleat V Bank Filter in the market. Existing designs consist of a top panel, a bottom panel and a middle frame which are subsequently assembled together as a single entity during installation. These panels and frames are also manufactured as different parts, and the panels and frames are formed by assembling or connecting parts together. Injection molded, extruded or thermoformed parts are used for this. The maximum burst strength of these type of filters are up to 6200 pa. The filters are available in sizes such as 287mm x 287mm x 290mm up to 595mm x 595mm x 600mm (width x height x depth). The available products are manufactured using plastic parts wherein the plastic type used are ABS, HIPS, PVC, PP etc, as well as plastic and metal parts together.

Products such as SuperFLO Max extended surface, mini-pleat filters are designed for use in environments where low airflow resistance, high dust holding capacity, and long service life are crucial. The SuperFLO Max has five times the media surface area when compared to standard pleated air filters resulting in a lower energy cost and a longer service life.

The SuperFLO Max is constructed using heavy-duty metal, plastic, or beverage board frame with micro-fiberglass filter media. Adhesive beads in these filters ensure even airflow and filter strength. The micro-fiberglass filter media is resistant to moisture and will not promote the growth of bacteria, mold, mildew, or fungi in normal operating environments. The media pack is securely bonded with a urethane adhesive to the metal frame eliminating air bypass and creating an airtight seal.

Existing designs consist of a top panel, a bottom panel and a middle frame each of which comprise several smaller units which are assembled together as a single entity during installation. Some of the disadvantages of such panels are their lower burst strength and dust holding capacity. WO 2014/111162 A1 shows a housing for pleated filter. At least one of the walls of the housing is integrally made and a plurality of walls may be integrally made together. US 2012/0067013 A1 shows a V-shaped filter including a pair of filter media panel elements. A single unitarily molded fixture is provided, securing the pair of filter media panel elements in the V-shape.

The present invention provides a single molded filter assembly into which the pleated filter material is inserted. The mini-pleat filter of the present invention has a single molded top panel and bottom panel and middle frame. The single molded mini pleat V cell filter of the present invention has higher burst strength and dust holding capacity and longer service life.

### SUMMARY OF THE INVENTION

The following summary is provided to facilitate a clear understanding of the new features in the disclosed embodiment and it is not intended to be a full, detailed description. A detailed description of all the aspects of the disclosed invention can be understood by reviewing the full specification, the drawing and the claims and the abstract, as a whole.

The system of the present invention is to provide a V cell filter assembly comprising a frame that has a single molded (single body) lower panel and top panel. Advantageously, the single molded V cell filter assembly of the present invention avoids leakage and deformations.

In another aspect of the invention, there are plastic meshes on each wall of the V structure for securely enclosing the pleated filter and for stronger resistance which is an integral part of the single molded main body.

The new molded structure provides an higher burst strength which is able to withstand over 10,000 Pascal of pressure.

In another aspect of the present invention more surface area is conceivable because of space optimization in a single molded built, and therefore more square feet of filter area is achieved .

### BRIEF DESCRIPTION OF THE DRAWINGS

The manner in which the proposed system works is given a more particular description below, briefly summarized above, may be had by reference to the components, some of which are illustrated in the appended drawing. It is to be noted, that the appended drawing illustrates only typical embodiments of this system and therefore should not be considered limiting of its scope, for the system may admit to other equally effective embodiments.

The features and advantages of the present proposed system will become more apparent from the following detailed description along with the accompanying figures, which forms a part of this application and in which:

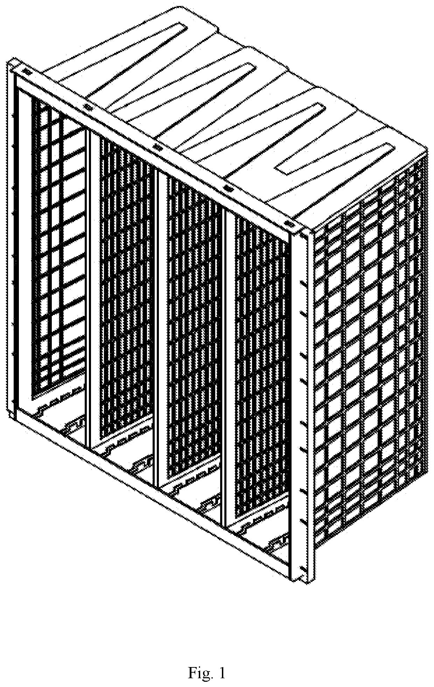

Fig.1 depicts the back view of the V cell filter in accordance with the present invention.

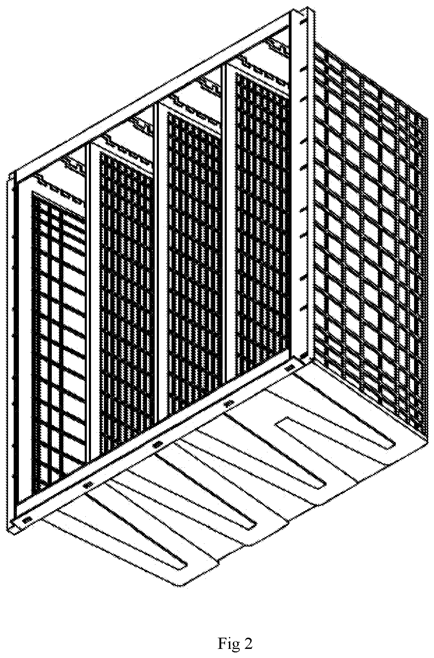

Fig.2 depicts the bottom front view of the V cell filter in accordance with the present invention.
Fig. 3 illustrate the chart displaying the increase of pressure drop versus the dust load in accordance with the present invention.
Fig. 4a: shows filter after loading to 2.000 Pa - upstream side.
Fig. 4b: shows filter after loading to 3.000 Pa - upstream side.
Fig. 4c: illustrates filter after loading to 4.000 Pa - upstream side.
Fig. 4d: illustrates filter after loading to 5.000 Pa - upstream side.
Fig. 4e: illustrates filter after loading to 6.000 Pa - upstream side.
Fig. 4f: illustrates filter after loading to 8.200 Pa - upstream side.
Fig. 5a: illustrates horizontal view of the filter after loading to 8.200 Pa - downstream side.
Fig. 5b: illustrates side view of the filter after loading to 8.200 Pa - downstream side.

### DETAILED DESCRIPTION OF THE INVENTION

The principles of operation, design configurations and evaluation values in these non-limiting examples can be varied and are merely cited to illustrate at least one embodiment of the invention, without limiting the scope thereof.

The embodiments disclosed herein can be expressed in different forms and should not be considered as limited to the listed embodiments in the disclosed invention. The various embodiments outlined in the subsequent sections are constructed such that it provides a complete and a thorough understanding of the disclosed invention, by clearly describing the scope of the invention, for those skilled in the art.

The filter assembly of the present invention comprises a frame assembly having single molded frame with mesh grid as a single body without any joints and a filter media having web of pleated media having mini-pleated regions arranged in V-bank orientation. V-bank orientation is an arrangement of the filter media in a series of paired arrangement of filtration portions in a V-shape, and connected together at top and bottom of the plastic frame using a potting agent. The term 'potting' herein refers to joining two components/parts using an adhesive. In the present invention the filter media is potted (joined) to the frame using a 2 part polyurethane adhesive.

In one embodiment of the present invention the V cell filter assembly comprises a frame that has a single molded lower panel having a V shape structure and a top panel flange structure, for avoiding leaks and deformations during high pressure conditions. The plastic meshes on each wall of the bottom panel V structure securely encloses the mini-pleated filter and prevent the filter from damages due to high pressure which is critical for installations such as in those provided at air intake portion of a gas turbine.

The single molded mini-pleat V cell structure of the present invention will withstand pressure of about 10,000 pascal or more.

In one embodiment of the present invention the V cell filter assembly comprises a frame having width ranging about 250mm to 625mm, height ranging from 250mm to 625mm and depth ranging from 150mm to 650mm.

The dimensions of the present invention are disclosed below:
Standard Sizes for the invention are (Width x Height X Depth)
   592mm x 592mm x 296mm with 20mm or 25mm header flange;
   490mm x 592mm x 296mm with 20mm or 25mm header flange;
   287mm x 592mm x 296mm with 20mm or 25mm header flange;
   592mm x 592mm x 430mm with 20mm or 25mm header flange;
   490mm x 592mm x 430mm with 20mm or 25mm header flange;
   287mm x 592mm x 430mm with 20mm or 25mm header flange;
Other available sizes are: (Height and Width x Depth varies);
Width ranging from 250mm to 625mm; height ranging from 250mm to 625mm; and depth ranging from 150mm to 650mm.

The present invention provides a new design for the main filter frame body where the filter media is assembled in is produced as a single molded frame without any plastic or metal parts locked together, and closes the single molded bottom frame by a single front cover plastic frame and an inserted pleat separator; all in plastic material.

The present invention design can be industrially manufactured in sizes such as 250mm x 250mm x 250mm up to 625mm x 625mm x 650mm sizes, as width x height x depth (all sizes in between are covered in this design). The mini-pleat V cell filter assembly has wall thickness of about 1mm - 5mm.

Being a single molded frame design in which the filter media is assembled in to, the filter frame can withstand a burst pressure over 10,000pa while holding filter media loaded with over 5,000 grams of dust, without causing any structural damage to the frame. Prior art filter frames which are joined together at corners would not withstand pressure of over 10,000Pa using a similar amount of potting compound like those in the present invention. The potting compound used in the present invention is polyurethane. Different plastic combinations such as but not limited to polyamide, polypropylene, High Impact Polystyrene (HIS), High Density Poly Ethylene (HDPE), nylon, Low Density Poly Ethylene (LDPE), Acrylonitrile Butadiene Styrene (ABS), and combination of plastics can be used.

Assembly of the filter can be carried out easily and efficiently as there are no joints to be locked. Therefore, advantageously, assembling the mini-pleat V cell filter units of the present invention can be carried out faster. This saves time and resource for assembling the units.

The capacity to withstand high pressure and dust increases the productivity and life of the filter. Also, minimal quantity of potting compounds like polyurethane (less than 1.5 kg per filter for size 592x592x430mm) or other plastic is required to manufacture mini-pleat V cell filter units of the present invention which still withstand pressure of over 10,000Pa . The burst resistance of the filter is defined as the pressure drop across a filter at a stated flow and under given conditions; generally expressed in millimeters water gauge or PSI, or in SI units as N/m² or Pascals.

This design can also be used for recurring use of filter frame by changing only filter medium in HVAC applications. This will reduced cost of filter as well as plastic wastage. The pleat separator insert holds the filter media pleats in position and reduces the use of potting compounds like polyurethane.

The plastic mesh is an integral part of the filter frame body. This saves space allowing use of higher filter surface area for the filter . This mesh can be made with open surface area of 60% to 90% . The similar designs available in the market has mesh as a separate part which is potted using two-part polyurethane to hold it on to the frame and can withstand the pressure. In the present invention polyurethane or other potting compounds are not used to hold the mesh to the filter body.

### Examples

### Example 1

Following experiment was conducted in a test specimen having the below specification: Experiments are conducted based on ARAMCO standards where it is required to establish minimum requirements for the selection, design, construction, test, maintenance, and repair of equipment and facilities.
V-bank filter with four cells in plastic frame
Model / Parts ID: CVXXLGT9-44-17SN Additional identification: Clairo Cell VGT XXL-N
Media type / ID: Microfine Fiberglass / not indicated
Flow direction: Inside - out Dimensions (total): 592 x 592 x 430 mm
Pleat height: 28 mm
Nominal air flow: 4250 m³/h
Ambient pressure: 976 mbar
Samples received: December 5^{th}, 2022
Test performed: December 21st, 2022
Test Conditions:
   Nominal airflow: 4250 m³/h
   Temperature: 23-29 °C
   Rel. humidity upstream: < 70 %
   Ambient pressure: 976 mbar
   Loading dust: ISO 12103-1 A2
   Average dust loading concentration: ca. 570 mg/m³
The above results were compared with existing standard products and the comparative data shows that the present invention has the highest burst strength.

### Example 2: Prior Art filter

Manufacturer: Clarion Filters
Filter Model: Clairo Cell V
Part Number: CGVT8-44-12
Filter Type: Compact Minipleat Filter
Filter Date Code: 04.03.2020
Nominal Face Dimensions 24" x 24"
Nominal Depth: 12"
Pocket / Pleat Quantity: 8 Pleat Packs
Media Type: Microfine Fiberglass
Est. Gross Media Area: 20 m²
Adhesive Type: NA
Adhesive Amount: NA
Test Air Flow Rate (CFM): 0.59
Test Dust Used: ISO Fine
Test Duct Number: 5
Test Air Temp (degrees F.): 67
Relative Humidity (%): 40
Barometric Pressure (In. Hg.): 29.32
Initial Resistance (Inches Water Gage): 0.59
Final Resistance (Inches Water Gage): 25.00

### OBSERVATIONS OF EXAMPLE 2:

| **Inches of W.C.** | **Comments** |
|---|---|
| 0.59 | Initial. |
| 2.00 | No change in filter appearance or integrity. No dust bypass downstream. |
| 5.00 | No change in filter appearance or integrity. No dust bypass downstream. |
| 8.00 | Slight pleat movement. No dust bypass downstream. |
| 12.00 | Moderate pleat movement. Media panels are deflecting back slightly. No dust bypass downstream. |
| 16.00 | Significant pleat movement. Media panels are deflecting back moderately. No dust bypass downstream. |
| 20.00 | Significant pleat movement. Media panels are deflecting back moderately. No dust bypass downstream. |
| 25.00 | Significant pleat movement. Media panels are deflecting back significantly. No dust bypass downstream. |

### Example 3: Inventive filter

Manufacturer: Filtrowin Industries
Filter Model: Filtro Cell VGT XXL (FP)
Part Number: FVGTXXL9-44-12
Filter Type: Compact Filter GT
Filter Date Code: NA
Nominal Face Dimensions 23.3" x 23.3"
Nominal Depth: 17"
Pocket / Pleat Quantity: 4 V
Media Type: Microfiber
Est. Gross Media Area: 318 Ft²
Adhesive Type: PU
Adhesive Amount: 2.75 Kg
Test Air Flow Rate (CFM): 2500
Test Dust Used: ISO Fine
Test Duct Number: 5
Test Air Temp (degrees F.): 49
Relative Humidity (%): 37
Barometric Pressure (In. Hg.): 29.29
Initial Resistance (Inches Water Gage): 0.47
Final Resistance (Inches Water Gage): 25.00

### OBSERVATIONS OF EXAMPLE 3:

| **Inches of W.C.** | **Comments** |
|---|---|
| 0.47 | Initial. |
| 2.00 | No change in filter appearance. No dust bypass downstream. |
| 4.00 | Significant pleat movement. Media panels are deflecting back slightly. No dust bypass downstream. |
| 6.00 | Significant pleat movement. Media panels are deflecting back moderately. Slight dust bypass downstream. |
| 8.00 | Significant pleat movement. Media panels are deflecting back significantly. One interior panel has partially torn vertically at the rear. Significant dust bypass downstream. |
| 12.00 | Significant pleat movement. Media panels are deflecting back significantly. Multiple panels have partially torn vertically at the rear. Significant dust bypass downstream. |
| 16.00 | Significant pleat movement. Media panels are deflecting back significantly. Multiple panels have partially torn vertically at the rear. Significant dust bypass downstream. |
| 20.00 | Significant pleat movement. Media panels are deflecting back significantly. Multiple panels have partially torn vertically at the rear. Significant dust bypass downstream. |
| 25.00 | Significant pleat movement. Media panels are deflecting back significantly. Multiple panels have partially torn vertically at the rear. Significant dust bypass downstream. |

Burst Resistance is expressed in millimeters water gauge or PSI, or in SI units as N/m² or Pascals.

The accuracy of the airflow control is 2% of the nominal value. The pressure drop was read with three sensors ranging: 0 - 300, 0 - 1000 und 0 - 10.000 Pa. The accuracy of the sensors is 1% of the range maximum. The test dust has been dispersed with an auger type feeder (Fa. Brabender Technology) and four injection nozzles according to ISO 5011. The dust has not been electrically discharged.

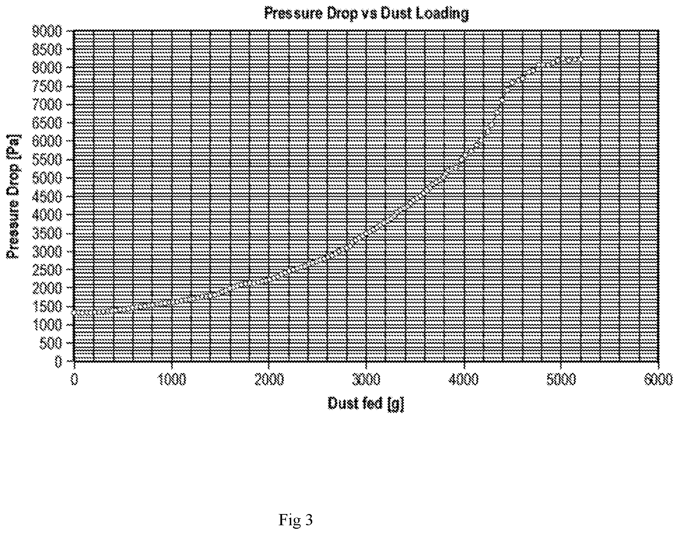

Results of the loading phase up to 8.000 Pa: Test dust fed: 5.192,3 g. The Fig. 3 illustrate the chart displaying the increase of pressure drop versus the dust load. The filter was visually inspected each 1.000 Pa. The filter element resisted a heavy dust loading procedure up to a differential pressure of 8.200 Pa without any visible damage to the filter frame or grid.

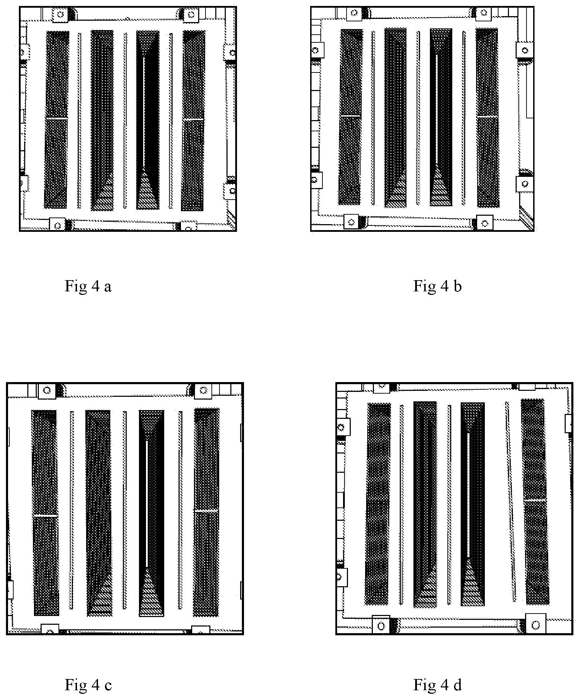

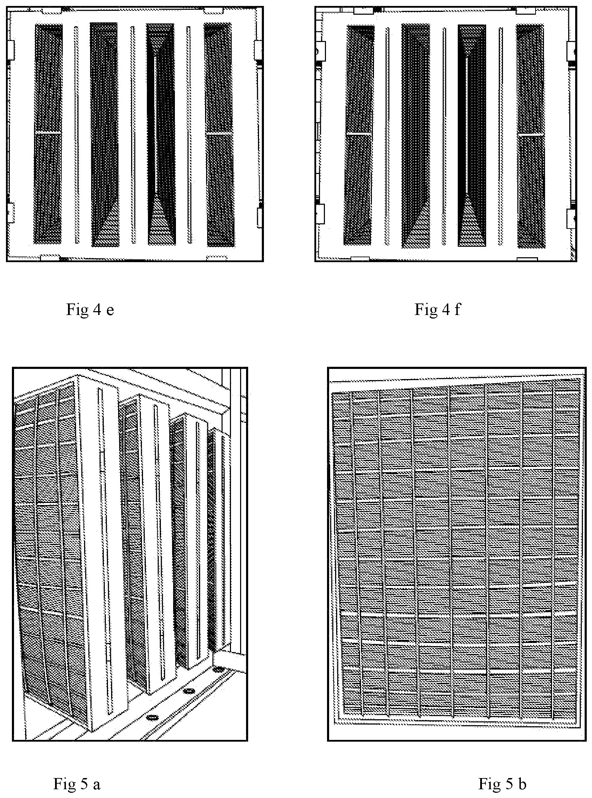

Figures 4a to 4f shows filter after loading to 2.000 Pa, 3.000 Pa, 4.000 Pa, 5.000 Pa, 6.000 Pa, 8.200 Pa upstream side. Figures 5a and 5b shows side view of the filter after loading to 8.200 Pa - downstream side. The mini-pleat V cell filter assembly of the present invention has burst of about 8,000pa to10,000pa.

## Claims

1. A mini-pleat V cell filter assembly for HVAC applications and/or gas turbine air intake applications, comprising:
a top panel,
a bottom panel, and
a middle frame having mesh grid integrated to the frame which encloses the mini-pleated filter media;
wherein the top panel, the bottom panel and the middle frame are manufactured in a single mold in plastic polymer; and
the pleated filter media having mini-pleated regions arranged in a V-bank orientation wherein the filter media is arranged in a series of paired arrangement of filtration portions in a V-shape

2. The mini-pleat V cell filter assembly as claimed in claim 1 wherein the assembly has burst strength of about 8,000pa to10,000pa.

3. The mini-pleat V cell filter assembly as claimed in claims 1 and 2, wherein the assembly is able to hold about 5000 grams of dust.

4. The mini-pleat V cell filter assembly as claimed in claims 1 to 3 wherein the mesh has an open surface area of about 60% to 90%.

5. The mini-pleat V cell filter assembly as claimed in claim 3 wherein the dust is dry dust and/or wet dust.

6. The mini-pleat V cell filter assembly as claimed in claims 1 to 5 wherein the top panel and the bottom panel have wall thickness of about 1mm - 5mm.

7. The mini-pleat V cell filter assembly as claimed in claims 1 to 5 wherein the plastic polymer is selected from polyurethane, polyamide, polypropylene, High Impact Polystyrene (HIS), High Density Poly Ethylene (HDPE), nylon, Low Density Poly Ethylene (LDPE), Acrylonitrile butadiene styrene (ABS), and combination of plastics.

## Patentansprüche

1. Minipleat-V-Zellen-Filteranordnung für HLK-Anwendungen und/oder Gasturbinen-Luftansauganwendungen, umfassend:
eine obere Platte,
eine untere Platte und
einen in der Mitte befindlichen Rahmen, der ein Maschengitter aufweist, das mit dem Rahmen integriert ist und das mit Minifalten versehene Filtermedium umschließt;
wobei die obere Platte, die untere Platte und der in der Mitte befindliche Rahmen in einer einzigen Form aus Kunststoffpolymer hergestellt werden; und
das gefaltete Filtermedium mit Minifalten versehene Bereiche aufweist, die mit einer V-Bank-Ausrichtung angeordnet sind, wobei das Filtermedium in einer Reihe von paarweisen Anordnungen von Filtrationsabschnitten mit einer V-Form angeordnet ist.

2. Minipleat-V-Zellen-Filteranordnung nach Anspruch 1, wobei die Anordnung eine Berstfestigkeit von etwa 8.000 Pa bis 10.000 Pa aufweist.

3. Minipleat-V-Zellen-Filteranordnung nach den Ansprüchen 1 und 2, wobei die Anordnung in der Lage ist, etwa 5000 Gramm Staub aufzunehmen.

4. Minipleat-V-Zellen-Filteranordnung nach den Ansprüchen 1 bis 3, wobei das Maschengebilde eine offene Fläche von etwa 60 % bis 90 % aufweist.

5. Minipleat-V-Zellen-Filteranordnung nach Anspruch 3, wobei der Staub trockener Staub und/oder nasser Staub ist.

6. Minipleat-V-Zellen-Filteranordnung nach den Ansprüchen 1 bis 5, wobei die obere Platte und die untere Platte eine Wanddicke von etwa 1 mm - 5 mm aufweisen.

7. Minipleat-V-Zellen-Filteranordnung nach den Ansprüchen 1 bis 5, wobei das Kunststoffpolymer aus Polyurethan, Polyamid, Polypropylen, hochschlagfestem Polystyrol (*High Impact Polystyrene* - HIS), Polyethylen mit hoher Dichte (*High Density Polyethylene -* HDPE), Nylon, Polyethylen mit niedriger Dichte (*Low Density Polyethylene -* LDPE), Acrylnitril-Butadien-Styrol (*Acrylonitrile Butadiene Styrene -* ABS) und einer Kombination von Kunststoffen ausgewählt ist.

## Revendications

1. Ensemble de filtre à cellules en V à mini-plis pour applications CVC et/ou applications d'admission d'air pour turbines à gaz, comprenant :
un panneau supérieur,
un panneau inférieur, et
un cadre central comportant une grille maillée intégrée au cadre qui renferme le média de filtre à mini-plis ;
dans lequel le panneau supérieur, le panneau inférieur et le cadre central sont fabriqués dans un seul moule en polymère plastique ; et
le média de filtre plissé comportant des régions mini-plissées agencées selon une orientation en bancs en V, dans lequel le média de filtre est agencé en une série d'agencements appariés de parties de filtration en forme de V.

2. Ensemble de filtre à cellules en V à mini-plis selon la revendication 1, dans lequel l'ensemble présente une résistance à l'éclatement comprise entre environ 8 000 Pa et 10 000 Pa.

3. Ensemble de filtre à cellules en V à mini-plis selon les revendications 1 et 2, dans lequel l'ensemble est capable de retenir environ 5 000 grammes de poussière.

4. Ensemble de filtre à cellules en V à mini-plis selon les revendications 1 à 3, dans lequel le maillage comporte une surface ouverte comprise entre environ 60 % et 90 %.

5. Ensemble de filtre à cellules en V à mini-plis selon la revendication 3, dans lequel la poussière est une poussière sèche et/ou humide.

6. Ensemble de filtre à cellules en V à mini-plis selon les revendications 1 à 5, dans lequel le panneau supérieur et le panneau inférieur ont une épaisseur de paroi comprise entre environ 1 mm et 5 mm.

7. Ensemble de filtre à cellules en V à mini-plis selon les revendications 1 à 5, dans lequel le polymère plastique est choisi parmi le polyuréthane, le polyamide, le polypropylène, le polystyrène à haute résistance aux chocs (HIS), le polyéthylène haute densité (HDPE), le nylon, le polyéthylène basse densité (LDPE), l'acrylonitrile butadiène styrène (ABS) et une combinaison de plastiques.
